# EUROPEAN PATENT APPLICATION

(11) **EP 2 345 325 A1**
(43) Date of publication of application: **20.07.2011**
(21) Application number: 11151183.8
(22) Date of filing: 17.01.2011
(51) Int. Cl.: A01M 29/16, F41A 23/34, F41F 3/042, F42B 3/12

(54) **Bird scaring device**

(30) Priority: 15.01.2010 GB 1000652
(71) Applicant: Robotic Control & Automation Limited, Workington Cumbria CA14 3LD (GB); Whittaker, Ian, Newbiggin, Hutton Roof Carnforth Lancashire LA6 2PL (GB)
(72) Inventor: Smith, Richard James, Workington, Cumbria CA14 3LD (GB); Whittaker, Ian David, Carnforth, Lancashire, LA6 2PL (GB)
(74) Representative: Wilson Gunn

(57) **Abstract**

A bird scaring device (1) having a means of attachment to a vehicle and a means of firing at least one rocket from the device (4) when the device (1) is attached to a vehicle (19). The device (1) may be provided with a user operable firing means (3) arranged to fire at least one rocket (11) from the device (1). The user operable firing means (3) may be operable by a person inside the vehicle. The invention also relates to a bird scaring vehicle (19) comprising a bird scaring device (1), a method of scaring birds and to a fuse ignition (26).

## Description

The present invention relates to a bird scaring device and the use thereof.

It is necessary, for reasons of health and safety, to keeps birds away from certain environments, for example land-fill sites and airport runways. A known method of scaring birds away is for a person to carry a firework to a suitable location, place the firework in the ground and light the firework. The airborne explosion of the firework acts to scare away any nearby birds.

This method suffers from a number of disadvantages. The above mentioned environments are typically hazardous to people. A person using the above method is exposed to these environments.

In addition it is time consuming, and typically cumbersome, for a person to travel to a desired firing location, place the fire-work in the ground, such that it is in an appropriate firing position, and light the fire-work. Furthermore, lighting the fire-work can often be problematic in windy conditions.

Embodiments of the present invention seek to overcome the above problems.

According to a first aspect of the invention there is provided a bird scaring device comprising a means of attachment to a vehicle and a means of firing at least one rocket from the device when the device is attached to a vehicle.

The rocket is preferably a pyrotechnic rocket.

The vehicle is preferably a land vehicle, for example a car, van or lorry.

This is advantageous in that when the device is attached to a vehicle, at least one rocket may be fired from a desired location by driving the vehicle to the desired location and then firing the rocket from the device. It is not necessary for a person to manually carry the rocket to the desired location. In addition, it is not necessary for a person to then have to mount the rocket in a firing position in the ground and prepare the rocket for firing.

Preferably this arrangement is such that the at least one rocket may be fired substantially upwards from the device. More preferably the at least one rocket may be fired substantially vertically upwards from the device.

Preferably the device is provided with a user operable firing means arranged to fire at least one rocket from the device. Preferably the user operable firing means is arranged such that when the device is incorporated on a vehicle, it is operable by a person inside the vehicle. More preferably, the user operable firing means is arranged such that when the device is incorporated on a vehicle, it is operable by a person inside a driver or passenger compartment of the vehicle.

This is advantageous in that at least one rocket may be fired from the device, in order to scare birds away, without the person firing the rocket having to leave the safety of the vehicle.

Preferably the user operable firing means comprises first and second actuating means arranged such that both the first and second actuating means must be actuated for a pre-determined length of time before at least one rocket is fired from the device. The first and second actuating means may be of any suitable type, including switches and/or buttons.

Preferably the device comprises at least one rocket enclosure, from which a rocket may be fired. Preferably the at least one rocket enclosure is arranged to house a rocket in a firing position. In this case, the at least one rocket enclosure is preferably arranged to at least substantially enclose a rocket in a firing position.

This is advantageous in that a fuse of the rocket may be ignited, in order to fire the rocket, while being protected by the rocket enclosure from the effects of wind.

The at least one rocket enclosure is preferably a tube. The tube is preferably substantially hollow.

Preferably the device comprises a means of firing a plurality of rockets. In this case, the device preferably comprises a plurality of said rocket enclosures. The plurality of rocket enclosures are preferably arranged side-by-side in a rack. Preferably the rocket enclosures are substantially parallel to each other and extend length-wise in substantially parallel directions.

Where the device comprises a means of firing a plurality of rockets, the device preferably comprises a user operable selection means, for selecting one or more specific rockets to fire upon operation of the user operable firing means. The user operable selection means is preferably a dial.

Preferably the device comprises a warning means, arranged to produce a warning when at least one rocket is fired, or immediately before at least one rocket is fired. The alarm may be any suitable optical and/or audible device, for example a flashing light or a sound emitting device respectively.

Preferably the device comprises at least one rocket arranged to be ready to fire from the device.

Preferably the bird scaring device comprises a fuse ignition according to the fourth aspect of the invention. Preferably the fuse ignition is arranged to ignite the fuse of a rocket.

According to a second aspect of the invention there is provided a bird scaring vehicle comprising a vehicle incorporating a bird scaring device according to the first aspect of the invention.

Where the device comprises a user operable firing means, the user operable firing means is preferably provided within a driver and/or passenger compartment of the vehicle.

Where the device comprises a launcher, the launcher is preferably mounted to the exterior of the vehicle. More preferably the launcher is mounted to the rear exterior of the vehicle.

The vehicle is preferably a land vehicle, for example a car, van or lorry.

According to a third aspect of the invention there is provided a method of scaring birds comprising driving a bird scaring vehicle according to the second aspect of the invention to a first location and firing at least one rocket from the bird scaring device.

Preferably the method of scaring birds further comprises the step of driving the vehicle to a second location and firing at least one rocket from the bird scaring device.

Preferably the at least one rocket is fired by a person in the vehicle, while the person is in the vehicle.

The present invention also relates to a fuse ignition.

It is currently known to ignite an 'explosive' fuse, i.e. a long cord with explosive material inside, by using an electrical detonator. The electrical detonator comprises a length of electrical wire provided at one end with a layer of explosive material, which is directly attached to the fuse. In order to ignite the fuse, an electrical current is passed through the wire. Heating of the wire causes the layer of explosive material to explode, which ignites the fuse.

Use of such an electrical detonator is disadvantageous in that the layer of explosive material of the detonator is relatively unstable and could be accidentally ignited through external factors, such as a stray spark, external heating or mechanical shock.

This also means that, for reasons of safety, detonators have to be supplied separately to explosives, e.g. rockets.

In addition, when the fuse is a fuse of a rocket, it is necessary to modify the rocket for use with an electrical detonator, which is illegal in many countries.

Embodiments of the present invention seek to overcome these problems.

According to a fourth aspect of the invention there is provided a fuse ignition comprising a fuse receiving means and an electrically conductive element arranged with the fuse receiving means such that upon application of an electrical current through said element, resistance heating of the element directly ignites a fuse received by the fuse receiving means.

According to a fifth aspect of the invention, there is provided a method of igniting a fuse using a fuse ignition according to the fourth aspect of the invention, comprising receiving a fuse within the fuse receiving means and supplying a current through the electrically conductive element such that resistance heating of the element directly ignites the fuse.

This is advantageous in that the element used to ignite the fuse is not chemically combustible, such as with a detonator. The element used to ignite the fuse (an electrically conductive element) can only be triggered to ignite the fuse by application of a sufficient electrical current. Therefore the fuse ignition of the present invention is safer and more stable than currently known ignitions.

This safety advantage also presents a practical advantage in that it allows a fuse to be supplied pre-installed with the ignition, removing the need for the user to have to do this themselves and so removing a dangerous step in the firing process for the user.

In addition, when the ignition is used with a rocket, the rocket does not have to be modified by the user, as when using a detonator, which is illegal in many countries.

The fuse is directly ignited in that resistance heating of the element heats the fuse to a temperature sufficient to ignite the fuse. No combustible material between the element and the fuse is required in order to ignite the fuse.

Preferably the electrically conductive element is arranged with the fuse receiving means such that when a fuse is received by the fuse receiving means, the fuse is in contact with said element.

Contact between the fuse and said element facilitates ignition of the fuse due to the resistance heating of said element.

Preferably the fuse receiving means comprises first and second electrically conductive sections which are electrically connected by said electrically conductive element, such that when an electrical voltage is applied across said first and second sections, an electric current flows through said element. Preferably said first and second electrically conductive sections are made from metal. More preferably said first and second electrically conductive sections are made from copper or aluminium.

Preferably said method comprises the step of applying a voltage across said first and second electrically conductive sections such that an electric current flows through said element.

Preferably the fuse receiving means is a substantially hollow tube, arranged to receive at least a section of the length of a fuse within the tube.

Preferably a section of the tube, provided between the first and second electrically conductive sections, is formed of a flammable material, such as cardboard. Resistance heating of said element causes ignition of said section. Burning of said section facilitates ignition of the fuse.

Preferably the electrically conductive element is a wire. Where the fuse receiving means is a substantially hollow tube, the wire is preferably provided on an interior surface of the tube. More preferably, the wire is spiralled around the interior surface of tube. This is advantageous in that it provides a large surface area of the wire that is exposed to a fuse received within the fuse receiving means, which aids ignition of the fuse.

The wire is preferably of a metal or metal alloy of such a resistance that resistance heating causes it to be heated to a temperature high enough to ignite a fuse received within the fuse receiving means.

The wire is preferably an alloy of nickel and chromium. Preferably the wire is of an alloy commonly referred to under the trademark Nichrome™.

Preferably the fuse ignition comprises a body provided with first and second electrical contacts and the fuse receiving means is releasably engageable with said body such that, when engaged, the first and second electrically conductive sections of the fuse receiving means are electrically connected to the first and second electrical contacts. In use, said first and second electrical contacts are preferably connected to a power source. Preferably the power source is a 12V or 24V power source. More than two of said electrical contacts may be used. The body is generally cuboidal in shape.

Preferably said method comprises the step of engaging said fuse receiving means with said body such that the first and second electrically conductive sections of the fuse receiving means are electrically connected to the first and second electrical contacts of the body.

This releasable engagement is advantageous in that it allows the fuse receiving element to be removed from the body for maintenance purposes, for example to replace the electrically conductive element if it has burnt out.

The fuse receiving means preferably comprises a plate provided with a means of said releasable engagement with the body. Where the fuse receiving means is a tube, the tube is preferably provided along one side of the plate.

The ignition preferably comprises a means of forcing the electrically conductive element into contact with a fuse received within the fuse receiving means. Preferably said means comprises a plate arranged to compress the fuse receiving means, and a fuse received therein, such that the electrically conductive element is in contact with the fuse.

This is advantageous in that contact between said element and the fuse facilitates ignition of the fuse upon resistance heating of the element.

Preferably said method comprises the step of using said plate to compress the fuse receiving means, and a fuse received therein, such that the electrically conductive element is in contact with the fuse.

Preferably the ignition comprises a latch mechanism connected to the plate so as to move the plate between a latched position, in which the plate acts to compress the fuse receiving means, and a fuse received therein, such that the electrically conductive element is in contact with the fuse and an unlatched position in which it does not.

Preferably said latch mechanism is connected to a first end of the plate and a region towards a second end of the plate is inclined at an acute angle relative to a lower surface of the plate, such that as the plate is moved between the latched and unlatched position, a line of intersection between the inclined surface and the lower surface of the plate is in contact with an edge of the body of the ignition and pivots about said edge.

The ignition is preferably for use with an explosive fuse.

The fuse is preferably the fuse of a rocket.

All of the features described herein may be combined with any of the above aspects, in any combination.

An embodiment of the present invention will now be described by way of example and with reference to the accompanying drawings, in which:
- **Figure 1**: shows a schematic diagram of a bird scaring device according to the present invention;
- **Figure 2**: shows a launcher of the bird scaring device shown in Figure 1;
- **Figure 3**: shows an enlarged view of a firing tube of the launcher shown in Figure 2, with the upper tube and the front of the terminal housing removed for illustrative purposes;
- **Figure 4**: shows a control box of the bird scaring device shown in Figure 1;
- **Figure 5**: shows a van incorporating the bird scaring device shown in Figures 1 to 4;
- **Figure 6**: shows a vertical cross-sectional view of a second embodiment of a launcher of the bird scaring device;
- **Figure 7**: shows a side elevational view of the launcher shown in Figure 6;
- **Figure 8**: shows a front perspective view of an ignition of the launcher shown in Figures 6 and 7, without a fuse holder and pressure plate of the ignition installed;
- **Figure 9**: shows a view corresponding to that of Figure 8, with the fuse holder installed, and
- **Figure 10**: shows a view corresponding to that of Figure 9, with the pressure plate installed.

In the following the terms upper, lower, side and the like terms are used for convenience and refer to the device as shown oriented in the drawings, the orientation in which it is intended to be used, and should not be taken as otherwise limiting.

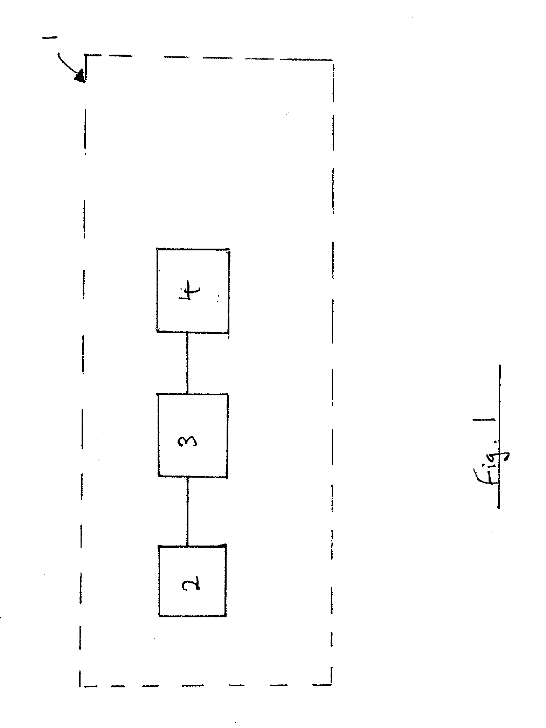

With reference to Figure 1, there is shown a bird scaring device 1. The bird scaring device 1 comprises a power source 2, a control box 3 and a launcher 4. The power source 2 is connected to the launcher 4 via the control box 3.

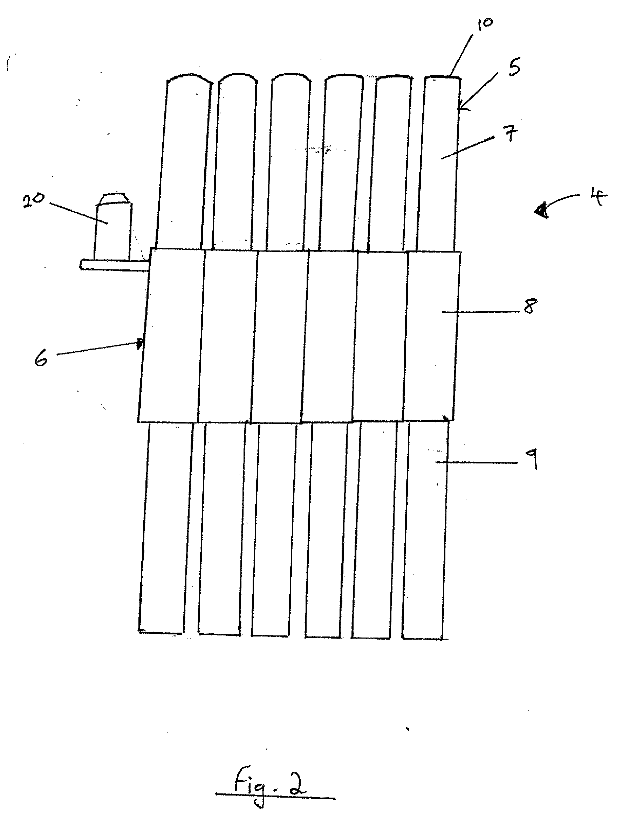

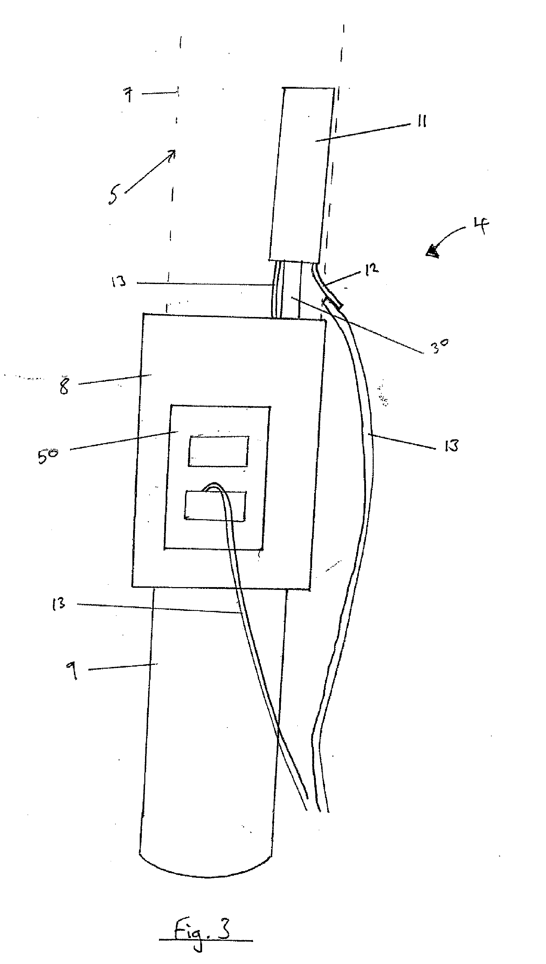

With reference to Figures 2 and 3, the launcher 4 comprises six firing tubes 5 mounted side-by-side in a rack 6, and extending length-wise in substantially parallel directions. Each firing tube 5 comprises an upper tube 7 mounted at a first end to a terminal housing 8, which is itself mounted on a lower tube 9. A second end 10 of the firing tube is open. A filter (not shown) is provided in the bottom of each firing tube 5, in order to allow drainage. The top of each firing tube 5 is detachable, in order to allow insertion of a rocket.

A rocket 11 is housed within each of the upper tubes 7. Each rocket 11 is mounted in the respective tube, on a stick 30.

Each rocket 11 is provided with a fuse 12, which is connected by a pair of detonator wires 13 to the control box 3 via an electrical terminal 50 provided within the respective terminal housing 8. Alternatively, a detonator may be formed as an integral part of the rocket.

The power source 2 is electrically connected to the detonators wires 13 of the launcher 4 via the control box 3. The power source 2 may be of any suitable magnitude, but in the present embodiment is a 12V or 24V power source.

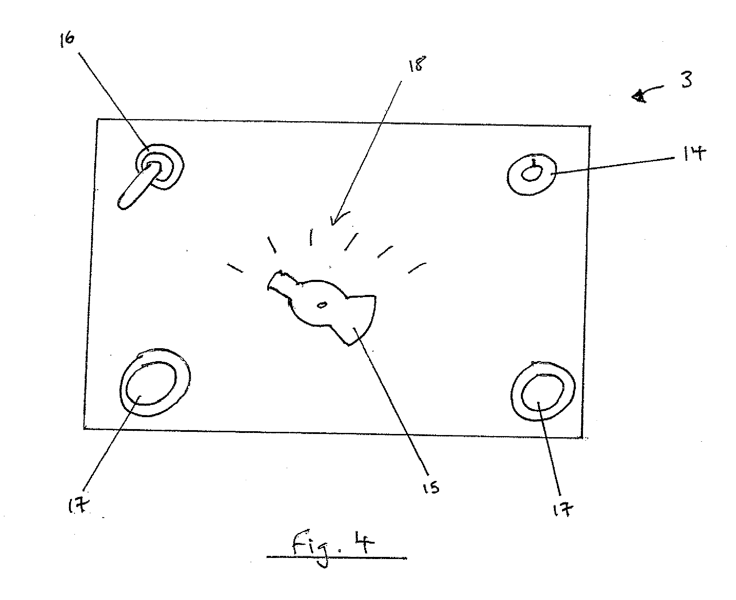

With reference to Figure 4, the control box 3 is provided with a key-operated on/off switch 14, a firing tube selector switch 15, an arm switch 16 and two firing switches 17.

The key-operated on/off switch 14 electrically connects/disconnects the control box 3 to the power supply 2.

The firing tube selector switch 15 may be switched between six different positions 18, with each position corresponding to one of the firing tubes 5. The selector switch 15 electrically connects the power supply 2 to the selected firing tube 5, via the respective pair of detonator wires 13. The selector switch 15 may be arranged to fire one, or more than one, rocket 11 at the same time.

The arm switch 16 arms/disarms the bird scaring device 1.

In order to initiate firing a rocket 11, the key-operated switch 14 is turned to its 'on' position. The desired firing tube 5 is then selected by moving the selector switch 15 to the appropriate position. The arm switch 16 is then moved to its 'on' position, thereby arming the device 1.

In order to fire the selected rocket 11, the two firing switches 17 must be pressed simultaneously for a pre-determined amount of time, for example eight seconds. This prevents accidental firing of a rocket 11. In addition, this allows the firing of a rocket 11 to be aborted. The respective detonator wires 13 then ignite the fuse 12 of the rocket 11 and the rocket 11 is fired out of the upper tube 7 of the selected firing tube 5, through its upper end 10.

The rocket 11 then explodes in mid-air, thereby acting to scare away any nearby birds.

The device also comprises a warning klaxon 20 mounted to the rack 6. When the firing switches 17 are pressed, the warning klaxon 20 is sounded. This acts to warn anybody nearby that one or more rockets is about to be fired from the device 1.

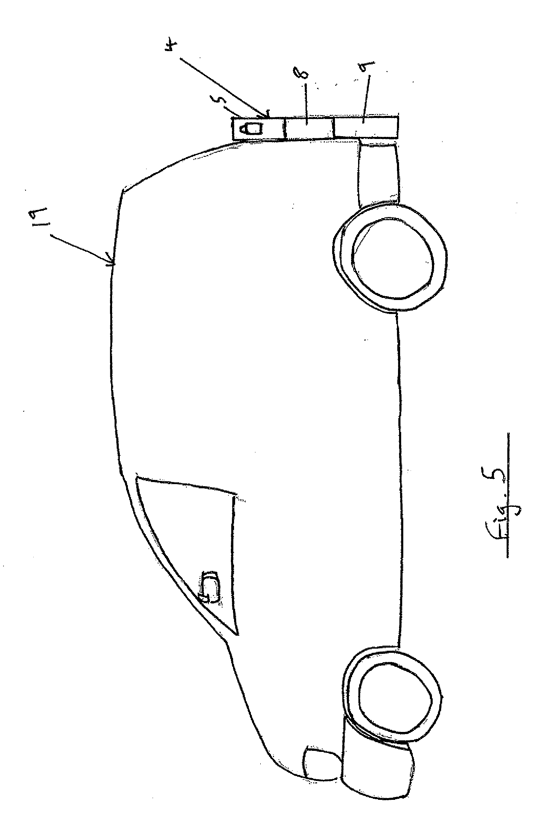

Referring to Figure 5, the bird scaring device 1 is provided on a vehicle 19. The power source 2 and control box 3 are provided within the vehicle 19, with the launcher 4 mounted to the exterior of the vehicle 19.

In an alterative embodiment, the bird scaring device 1 may use the power source of the vehicle, instead of its own power source 2. In this case, the control box 3 may be connected to the power source of the vehicle by any suitable means, including through a cigarette lighter of the vehicle.

The control box 3 is provided within the driver's compartment of the vehicle, such that it may be operated by the driver or a passenger of the vehicle 19. This allows one or more of the rockets 11 to be fired without the person firing the rocket having to leave the vehicle 19. Since environments which require birds to be scared away from are typically hazardous, such as land-fill sites, this provides safety advantages to the person firing the rocket 11.

In addition, rockets 11 may be fired easily and conveniently from different locations as the vehicle 19 merely needs to stop at the relevant location before the rocket 11 can be fired. It is not necessary for a person to leave the vehicle, mount the rocket launching device in the ground, wire the fuse of the rocket according, etc.

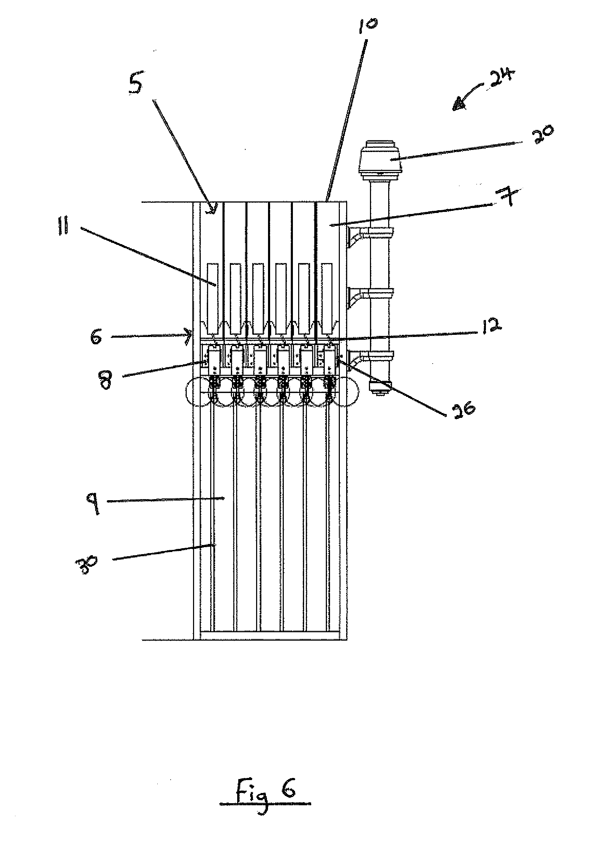

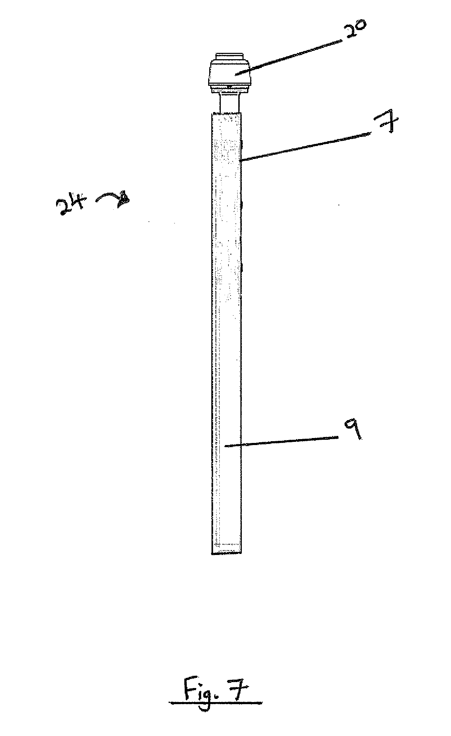

Referring now to Figures 6 and 7, there is shown a second embodiment of a launcher 24 of the bird scaring device 1.

The launcher 24 is the same as that of the above described launcher 4, except that the detonator wires 13 are connected to the fuse 12 of each rocket via respective ignitions 26, provided in each firing tube 5. Like reference numerals have been used where the features of the second embodiment of the launcher 24 are the same as the features of the above described launcher 4.

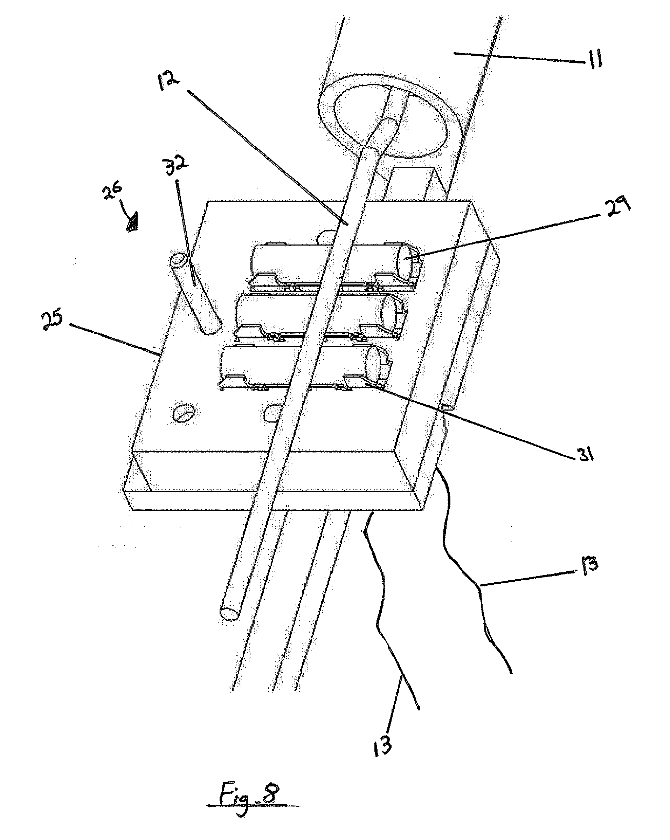

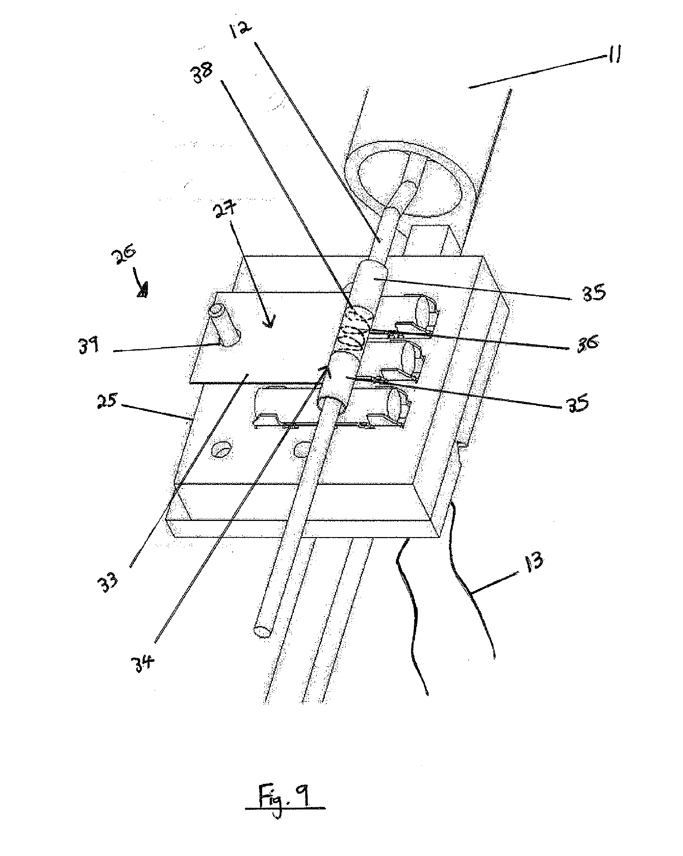

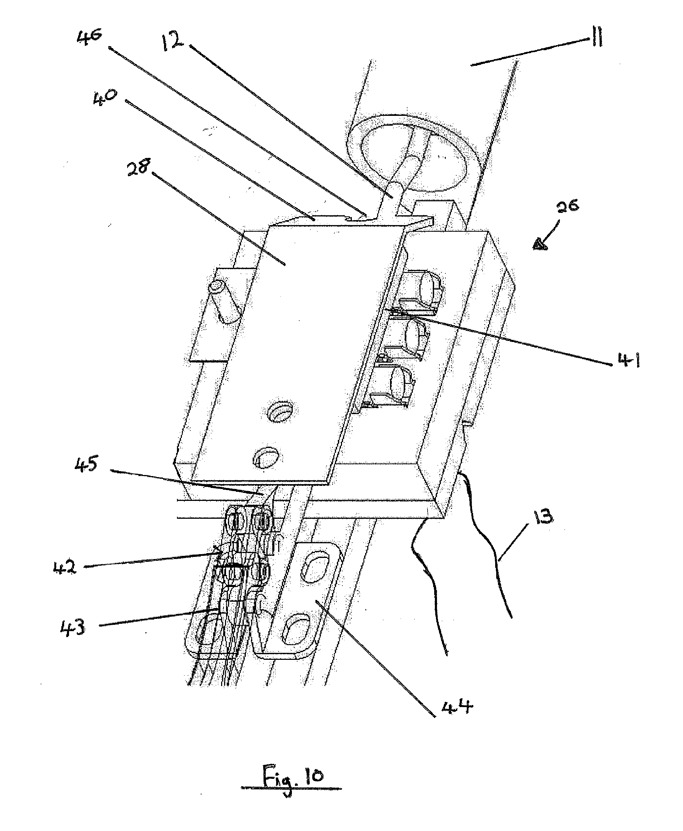

Referring now to Figures 8 to 10, the ignition 26 comprises a contact block 25, a set of contacts 29, a fuse holder 27 (see figure 9) and a pressure plate 28 (see figure 10).

The contact block 25 is generally cuboidal in shape. In use, a lower surface of the contact block 25 is mounted onto an inner surface of the terminal housing 8, such that, in use, the stick 30 of a respective rocket 11 passes beneath the contact block 25. The set of contacts comprises three contacts 29, mounted on an upper surface of the contact block 25. Each contact is has the shape of a generally solid cylinder. Each contact 29 is formed from copper, aluminium, or any other suitable electrically conductive material. The contacts 29 are arranged in a column, spaced in a length direction of the contact block 25, such that the contacts 29 extend lengthwise in a parallel direction, with their respective ends in-line. Each contact 29 is electrically connected to respective detonator wires 13.

Each contact 29 is mounted on the upper surface of the contact block 25 by a pair of retainer clips 31, with each retainer clip 31 provided towards a respective end of the contacts 29. Each retainer clip 31 comprises a pair of opposed, resiliently deformable, members which, when unloaded, are spaced apart by a distance less than the diameter of the contacts 29. When a contact 29 is inserted into a retainer clip 29, each member is loaded in compression, acting to clamp the respective end of the contact 29 to the upper surface of the contact block 25.

A retaining peg 32 is mounted on the upper surface of the contact block 25, and protrudes outwardly therefrom, in a direction generally perpendicular to said upper surface.

The fuse holder 27 comprises a generally rectangular plate 33, provided along one side edge with a tube 34. The tube 34 may be integrally formed from the plate 33, or may be attached to the plate 33 by any suitable means, for example by welding.

The plate 33 may be made of any suitable material, but is preferably of metal. The tube 34 is substantially hollow and comprises first and second end regions 35 formed of an electrically conductive metal, for example copper or aluminium. A middle region 36, which is bounded by the first and second end regions, is formed of a flammable material, such as cardboard.

A Nichrome™ wire 38 is spiralled around an inner surface of the tube 34, electrically connecting the first and second, electrically conductive, end regions of the tube 34.

An aperture 39 is provided towards side of the plate opposite the tube 34. The aperture 39 is sized and configured to receive the retaining peg 32 of the control block 25.

The pressure plate 28 (see figure 10) comprises a generally rectangular plate, whereby a region of the plate 40 provided towards one of its shorter sides is folded at a generally acute angle relative to a lower surface of the remainder of the plate 28, towards the lower surface of the plate 28.

The pressure plate 28 is made of a ceramic material. A region of the lower surface of the pressure plate 28 is provided with a pad 41.

The ignition further comprises a latch 42. The latch comprises a latch mechanism mounted on a base 44. The base 44 is mounted onto an inner surface of the terminal housing 8. The latch mechanism comprises a manually operable lever 43 pivotally connected at one end to a pivot arm 45. The pivot arm 45 is connected to a side of the pressure plate 28 that is opposite to the folded side 40. The latch mechanism 43 is arranged such that operation of the lever 43 acts to latch/unlatch the pressure plate 28, as described below.

To connect the ignition 26 to a fuse 12 of a rocket 11, the fuse 12 is threaded through the tube 34 of the fuse holder 27. The fuse holder 27 is then mounted onto the contact block 25, passing the retaining peg 22 of the contact block 25 through the aperture 39 in the plate 33 of the fuse holder 27.

The position of the fuse holder 27 is then adjusted so that the contacts 35 of the tube 34 are in contact with the contacts 29 of the contact block 25. When in contact, the fuse 12 and tube 34 extend generally perpendicular to the length of the contacts 29 of the contact block 25, at generally a mid-point along their length.

The lever 43 of the latch 42 is then actuated to move the pressure plate 28 into its latched position. In the latched position, the pressure plate 28 acts to compress the Nichrome™ wire 38 of the tube 34 against the fuse 12, by contact of the pad 28 of the plate 28 with the tube 34, which acts to compressively deform the tube 34.

As the pressure plate 28 is lowered into the latched position, a line of intersection of the folded and unfolded sections of the plate 28 is in contact with an edge of the contact block 25. The pressure plate 28 pivots about said line of intersection. The folded section 40 of the pressure plate 28 acts to retain the plate 28 against the contact block 25, by abutting against said edge of the contact block 25.

The free end of the folded region 40 of the pressure plate 28 is provided with a cut-out 46, which allows the fuse 12 of the rocket 11 to pass through said folded region 40 of the pressure plate 28 and into the tube 34 provided underneath the pressure plate 28.

In order to fire a rocket 11, the control box 3 is operated as previously described such that a voltage is applied, by the detonator wires 13, to the ignition 26 of the desired firing tube 5.

The voltage is applied, by the detonator wires 13, to the contacts 29 of the contact box 25 of the ignition 26. Due to the electrical connection of the contacts 29 of the contact box 25 with the contacts 35 of the tube 34, the voltage is then applied across the contacts 35 of the tube 34, thereby causing a current to flow through the Nichrome™ wire 38.

Resistance heating of the Nichrome™ wire 38 causes the wire to become hot enough to ignite the fuse 12 of the rocket 11. The ignited fuse 12 then fires the rocket 11 out of the firing tube 5.

In addition, the resistance heating of the Nichrome™ wire causes ignition of said middle region 36 of the tube 34. Burning of said middle region 36 facilitates ignition of the fuse 12.

The above described ignition 26 may be used with the launcher 24, as described above, or may be used with any suitable rocket launching means, and may be used with any type of rocket, including pyrotechnic rockets or fireworks.

In addition, the ignition may be used with a fuse of any type of explosive (e.g. dynamite) and is not limited to use with rockets.

The ignition is advantageous in that the element used to ignite the fuse is not chemically combustible, such as with a detonator. The element used to ignite the fuse (an electrically conductive element) can only be triggered to ignite the fuse by application of a sufficient electrical current. Therefore the fuse ignition is safer and more stable currently known ignitions.

This safety advantage also presents a practical advantage in that it allows a fuse to be supplied pre-installed with the ignition, removing the need for the user to have to do this themselves and so removing a dangerous step in the firing process for the user.

In addition, when the ignition is used with a rocket, the rocket does not have to be modified by the user, as when using a detonator, which is illegal in many countries.

The above described embodiment has been described as an example only, many variations are possible without departing from the scope of the invention.

## Claims

1. A bird scaring device comprising a means of attachment to a vehicle and a means of firing at least one rocket from the device when the device is attached to a vehicle.

2. A bird scaring device according to any preceding claim wherein the device is provided with a user operable firing means arranged to fire at least one rocket from the device.

3. A bird scaring device according to claim 2 wherein the user operable firing means is arranged such that when the device is incorporated on a vehicle, it is operable by a person inside the vehicle.

4. A bird scaring device according to either of claims 2 or 3 wherein the user operable firing means comprises first and second actuating means arranged such that both the first and second actuating means must be actuated for a pre-determined length of time before at least one rocket is fired from the device.

5. A bird scaring device according to any preceding claim wherein the device comprises at least one rocket enclosure, from which a rocket may be fired.

6. A bird scaring device according to any preceding claim wherein the device comprises a warning means, arranged to produce a warning when at least one rocket is fired, or immediately before at least one rocket is fired.

7. A bird scaring device according to any preceding claim wherein the device comprises a fuse ignition comprising a fuse receiving means and an electrically conductive element arranged with the fuse receiving means such that upon application of an electrical current through said element, resistance heating of the element directly ignites a fuse received by the fuse receiving means.

8. A bird scaring device according to claim 7 wherein the electrically conductive element is arranged with the fuse receiving means such that when a fuse is received by the fuse receiving means, the fuse is in contact with said element.

9. A bird scaring device according to either of claims 7 or 8 wherein the fuse receiving means comprises first and second electrically conductive sections which are electrically connected by said electrically conductive element, such that when an electrical voltage is applied across said first and second sections, an electric current flows through said element.

10. A bird scaring device according to any of claims 7 to 9 wherein the fuse receiving means is a substantially hollow tube, arranged to receive at least a section of the length of a fuse within the tube.

11. A bird scaring device according to claim 10 wherein the electrically conductive element is a wire spiralled around an interior surface of tube.

12. A bird scaring device according to claim 9, or either of claims 10 or 11 when dependent on claim 9, wherein the fuse ignition comprises a body provided with first and second electrical contacts and the fuse receiving means is releasably engageable with said body such that, when engaged, the first and second electrically conductive sections of the fuse receiving means are electrically connected to the first and second electrical contacts of the body.

13. A bird scaring device according to any of claims 7 to 12 wherein the ignition comprises a means of forcing the electrically conductive element into contact with a fuse received within the fuse receiving means.

14. A bird scaring vehicle comprising a vehicle incorporating a bird scaring device according to any preceding claim.

15. A method of scaring birds comprising driving a bird scaring vehicle according to claim 14 to a first location and firing at least one rocket from the bird scaring device.
